# EUROPEAN PATENT SPECIFICATION

(11) **EP 2 958 653 B1**
(45) Date of publication and mention of the grant of the patent: **06.06.2018**
(21) Application number: 14753797.1
(22) Date of filing: 21.02.2014
(51) Int. Cl.: B01D 46/10, B01D 46/24, B01D 46/42, B01D 46/00, B01D 46/12

(54) **DOWNFLOW DUST COLLECTORS HAVING DIRTY AIR CHANNELS**
ABWÄRTSFLIESSENDE STAUBSAMMLER MIT SCHMUTZLUFTKANÄLEN
COLLECTEURS DE POUSSIÈRE À ÉCOULEMENT DESCENDANT COMPRENANT DES CANAUX D'AIR SALE

(30) Priority: 22.02.2013 US 201361768291 P
(43) Date of publication of application: 30.12.2015
(73) Proprietor: Donaldson Company, Inc., Minneapolis, MN 55440-1299 (US)
(72) Inventor: RAETHER, Thomas, D., St. Louis Park, MN 55426 (US)
(74) Representative: Sutto, Luca
(86) International application number: PCT/US2014/017654
(87) International publication number: WO 2014/130799

(56) References cited:
- EP-A2- 0 083 169
- EP-A2- 0 083 169
- WO-A1-2014/065821
- WO-A2-2008/045325
- US-A- 4 718 924
- US-A- 5 223 008
- US-A1- 2004 187 689
- US-A1- 2011 078 985
- US-A1- 2011 083 408

## Description

Dust collectors having one or more dirty air channels and a clean air plenum having upper and lower clean air chambers are described herein along with related methods.

Dust collectors are used, e.g., to clean particulate matter from air flow streams. One embodiment of dust collectors includes bag house filters. Bag house filters include a housing, a dirty air inlet, a clean air outlet, and a tubesheet having a plurality of apertures. The tubesheet separates the housing between a dirty air side and a clean air side and holds the filter bags. The bags are made of a filter media so that as dirty air flows from the dirty air side to the clean air side, the air must flow through the bags, and the filter media of the bags prevents particulate matter from reaching the clean air side.

Another embodiment of dust collectors that is known includes the use of filter cartridges having pleated media. The filter cartridges are held by a tubesheet, and the air must flow through the pleated media of the filter cartridges from the dirty air side to the clean air side.

US5222008A discloses a dust collector with filter cartridges mounted in rows on a cartridge cradle disposed inside a housing for supporting the cartridges. US4718924 shows a dust collector with a compartment having an upper chamber with nozzles for downward air flow to remove dust by kinetic energy and a lower chamber containing filters for lateral and upward air flow to filter the remaining dust.

### SUMMARY

The invention relates to a dust collector and to a method of removing particulates from dirty air according to any one of the appended claims.

The dirty air channels define, in one or more embodiments, a dirty air flow axis along which dirty air flows from the dirty air channels into the dirty air chambers of the dust collectors. The dirty air channels are, in one or more embodiments, configured such that dirty air entering the dirty air chambers from the dirty air channels along the dirty air flow axes cannot directly impinge on the dirty air faces of filter cartridges in the dirty air chambers without changing direction in the dirty air chambers.

In one or more embodiments of the dust collectors described herein, the dirty air faces of filter cartridges may form included angles with the dirty air flow axes defined by the dirty air channels that are greater than zero degrees. Such arrangements may, in one or more embodiments, be advantageous because particulate matter entrained in the dirty air flow may be less likely to directly impinge on the filter material forming the dirty air faces of the filter cartridges while moving along the dirty air flow axes at higher velocities while leaving the dirty air channels and entering the dirty air chambers. Limiting that direct, higher velocity contact between particulates in the dirty air and the filter media may, in one or more embodiments, enhance the service life of filter cartridges in dust collectors as described herein.

In one aspect, one or more embodiments of a dust collector as described herein may include: a plurality of apertures formed through a tubesheet structure located in a housing, wherein the plurality of apertures comprise a first aperture and a second aperture; and a plurality of filter cartridges located in the housing, wherein the plurality of filter cartridges are positioned such that air passing through the plurality of apertures in the tubesheet structure must pass through at least one filter cartridge of the plurality of filter cartridges, wherein the tubesheet structure and the plurality of filter cartridges separate the housing into a clean air plenum and a dirty air plenum, and wherein the plurality of filter cartridges comprises a first filter cartridge and a second filter cartridge, and further wherein air passing through the first aperture must pass through a the first filter cartridge and air passing through the second aperture must pass through the second filter cartridge. The dirty air plenum comprises a dirty air channel located above a dirty air chamber, wherein the dirty air channel is located between a dirty air inlet through which dirty air enters the dirty air plenum and the dirty air chamber, wherein the dirty air chamber is located below a top of the first filter cartridge, and wherein the dirty air channel defines a dirty air flow axis through the dirty air channel. The clean air plenum comprises an upper clean air chamber located above the top of the first filter cartridge and a lower clean air chamber located below the upper clean air chamber and the top of the first filter cartridge, wherein the first filter cartridge comprises a dirty air face facing away from the lower clean air chamber, and wherein dirty air moving through the dirty air channel from the dirty air inlet to the dirty air chamber along the dirty air flow axis flows past the upper clean air chamber. Dirty air passing through the dirty air channel along the dirty air flow axis moves past a top of the first filter cartridge before reaching the dirty air chamber. The dirty air channel is configured such that dirty air entering the dirty air chamber from the dirty air channel along the dirty air flow axis cannot directly impinge on the dirty air face of the first filter cartridge without changing direction in the dirty air chamber.

In one or more embodiments of the dust collectors, dirty air passing through the dirty air channel along the dirty air flow axis moves past a top of the second filter cartridge before reaching the dirty air chamber.

In one or more embodiments of the dust collectors, the clean air plenum comprises: a first lower clean air chamber located below the top of the first filter cartridge and the first aperture in the tubesheet, wherein a clean air face of the first filter cartridge faces the first lower clean air chamber, and wherein the dirty air face of the first filter cartridge faces away from the first lower clean air chamber; and a second lower clean air chamber located below the top of the second filter cartridge and the second aperture in the tubesheet, wherein a clean air face of the second filter cartridge faces the second lower clean air chamber, and wherein a dirty air face of the second filter cartridge faces away from the second lower clean air chamber.

In one or more embodiments of the dust collectors, the first filter cartridge comprises a tubular filter cartridge comprising a cartridge opening located over the first aperture in the tubesheet, and wherein the second filter cartridge comprises a tubular filter cartridge comprising a cartridge opening located over the second aperture in the tubesheet.

In one or more embodiments of the dust collectors, a portion of the dirty air face of the first filter cartridge faces the dirty air flow axis, and wherein the dirty air flow axis forms an included angle greater than zero degrees with the portion of the dirty air face of the first filter cartridge, wherein the included angle opens in the downward direction towards the dirty air chamber. In one or more embodiments, the dirty air flow axis forms an included angle of 75 degrees or less with the portion of the dirty air face of the first filter cartridge.

In one or more embodiments of the dust collectors, a clean air face of the first filter cartridge faces the lower clean air chamber, and wherein a clean air face of the second filter cartridge faces the lower clean air chamber. In one or more embodiments, the clean air face of the first filter cartridge faces the clean air face of the second filter cartridge across the lower clean air chamber.

In one or more embodiments of the dust collectors, the first filter cartridge comprises a flat dirty air face facing the dirty air flow axis, and wherein the dirty air flow axis forms an included angle greater than zero degrees with the flat dirty air face of the first filter cartridge, wherein the included angle opens in the downward direction towards the dirty air chamber. In one or more embodiments, the dirty air flow axis forms an included angle of 75 degrees or less with the flat dirty air face of the first filter cartridge.

In one or more embodiments of the dust collectors, the dirty air plenum comprises a plurality of dirty air channels located above the dirty air chamber, wherein the plurality of dirty air channels comprises a first dirty air channel and a second dirty air channel, wherein dirty air flowing through the first dirty air channel defines a first dirty air flow axis and dirty air flowing through the second dirty air channel defines a second dirty air flow axis. Dirty air moving through the first dirty air channel from the dirty air inlet to the dirty air chamber along the first dirty air flow axis flows past the upper clean air chamber before flowing past the top of the first filter cartridge, and wherein dirty air moving through the second dirty air channel from the dirty air inlet to the dirty air chamber along the second dirty air flow axis flows past the upper clean air chamber before flowing past a top of the second filter cartridge. In one or more embodiments, the first dirty air channel is located on a first side of the upper clean air chamber and the second dirty air channel is located on a second side of the upper clean air chamber. In one or more embodiments, the first dirty air channel is separate and independent of the second dirty air channel such that dirty air passing through the first dirty air channel must enter the dirty air chamber before it can enter the second dirty air channel.

In one or more embodiments of the dust collectors, the first dirty air channel comprises a first dirty air inlet and the second dirty air channel comprises a second dirty air inlet, and further wherein the first dirty air inlet is separate and independent of the second dirty air inlet such that dirty air passing through the first dirty air inlet cannot enter the second dirty air channel unless it passes through the dirty air chamber first and dirty air passing through the second dirty air inlet cannot enter the first dirty air channel unless it passes through the dirty air chamber first.

In one or more embodiments of the dust collectors, a clean air face of the first filter cartridge faces the lower clean air chamber and a clean air face of the second filter cartridge faces the lower clean air chamber.

In one or more embodiments of the dust collectors, a clean air face of the first filter cartridge faces a clean air face of the second filter cartridge across the lower clean air chamber.

In one or more embodiments of the dust collectors, the first filter cartridge comprises a flat dirty air face, and wherein the first dirty air flow axis forms an included angle greater than zero degrees with the flat dirty air face of the first filter cartridge, wherein the included angle opens in the downward direction towards the dirty air chamber. In one or more embodiments, the first dirty air flow axis forms an included angle of 75 degrees or less with the flat dirty air face of the first filter cartridge.

In one or more embodiments of the dust collectors, the dust collector further comprises a pulse jet cleaning system comprising a plurality of valves configured to deliver pulses of cleaning gas into the clean air plenum.

In one aspect, one or more embodiments of a dust collector as described herein may include: a plurality of apertures formed through a tubesheet structure located in a housing, wherein the plurality of apertures comprise a first aperture, a second aperture, a third aperture, and a fourth aperture; and a plurality of filter cartridges located in the housing, wherein the plurality of filter cartridges are positioned such that air passing through the plurality of apertures in the tubesheet structure must pass through at least one filter cartridge of the plurality of filter cartridges, wherein the tubesheet structure and the plurality of filter cartridges separate the housing into a first clean air plenum, a second clean air plenum, and a dirty air plenum, and wherein the plurality of filter cartridges comprises a first filter cartridge, a second filter cartridge, a third filter cartridge, and a fourth filter cartridge, and further wherein air passing through the first aperture into the first clean air plenum must pass through the first filter cartridge, air passing through the second aperture into the first clean air plenum must pass through the second filter cartridge, air passing through the third aperture into the second clean air plenum must pass through the third filter cartridge, and air passing through the fourth aperture into the second clean air plenum must pass through the fourth filter cartridge, and further wherein the first filter cartridge comprises a dirty air face facing away from the first clean air plenum, the second filter cartridge comprises a dirty air face facing away from the first clean air plenum, the third filter cartridge comprises a dirty air face facing away from the second clean air plenum, and the fourth filter cartridge comprises a dirty air face facing away from the second clean air plenum. The first clean air plenum comprises a first upper clean air chamber located above a top of the first filter cartridge, and wherein the second clean air plenum comprises a second upper clean air chamber located above a top of the third filter cartridge. The dirty air plenum comprises a plurality of dirty air channels located above a dirty air chamber, wherein each dirty air channel of the plurality of dirty air channels is located between a dirty air inlet and the dirty air chamber, and wherein a first dirty air channel of the plurality of dirty air channels is located between the first upper clean air chamber and a first sidewall of the housing, a second dirty air channel of the plurality of dirty air channels is located between the first and second upper clean air chambers, and a third dirty air channel of the plurality of dirty air channels is located between the second upper clean air chamber and a second sidewall of the housing, and wherein the first dirty air flow channel defines a first dirty air flow axis, the second dirty air flow channel defines a second dirty air flow axis, and the third dirty air flow channel defines a third dirty air flow axis. The first dirty air channel is configured such that dirty air entering the dirty air chamber along the first dirty air flow axis from the first dirty air channel cannot directly impinge on the dirty air face of any of the first filter cartridge, the second filter cartridge, the third filter cartridge, or the fourth filter cartridge without changing direction in the dirty air chamber. The second dirty air channel is configured such that dirty air entering the dirty air chamber along the second dirty air flow axis from the second dirty air channel cannot directly impinge on the dirty air face of any of the first filter cartridge, the second filter cartridge, the third filter cartridge, or the fourth filter cartridge without changing direction in the dirty air chamber. The third dirty air channel is configured such that dirty air entering the dirty air chamber along the third dirty air flow axis from the third dirty air channel cannot directly impinge on the dirty air face of any of the first filter cartridge, the second filter cartridge, the third filter cartridge, or the fourth filter cartridge without changing direction in the dirty air chamber.

In one or more embodiments of the dust collectors, the first dirty air channel, the second dirty air channel, and the third dirty air channel are all separate and independent from each other such that dirty air passing through the first dirty air channel must enter the dirty air chamber before it can enter the second dirty air channel or the third dirty air channel.

In one or more embodiments of the dust collectors, the first dirty air channel comprises a first dirty air inlet, the second dirty air channel comprises a second dirty air inlet, and the third dirty air channel comprises a third dirty air inlet, and further wherein the first dirty air inlet, the second dirty air inlet, and the third dirty air inlet are separate and independent from each other such that dirty air passing through the first dirty air inlet cannot enter the second dirty air channel or the third dirty air channel unless it passes through the dirty air chamber first, wherein dirty air passing through the second dirty air inlet cannot enter the first dirty air channel or the third dirty air channel unless it passes through the dirty air chamber first, and wherein dirty air passing through the third dirty air inlet cannot enter the first dirty air channel or the second dirty air channel unless it passes through the dirty air chamber first.

In one or more embodiments of the dust collectors, the first clean air plenum comprises a first lower clean air chamber located below the first upper clean air chamber, wherein a clean air face of the first filter cartridge faces a clean air face of the second filter cartridge across the first lower clean air chamber of the first clean air plenum; and the second clean air plenum comprises a second lower clean air chamber located below the second upper clean air chamber, wherein a clean air face of the third filter cartridge faces a clean air face of the fourth filter cartridge across the second lower clean air chamber of the second clean air plenum.

In one or more embodiments of the dust collectors, the first filter cartridge comprises a flat dirty air face, and wherein the first dirty air flow axis is parallel with the flat dirty air face of the first filter cartridge or forms a first included angle equal to or greater than zero degrees with the flat dirty air face of the first filter cartridge, wherein the first included angle opens in the downward direction towards the dirty air chamber.

In one or more embodiments of the dust collectors, a second filter cartridge comprises a flat dirty air face, and wherein the second dirty air flow axis is parallel with the flat dirty air face of the second filter cartridge or forms a second included angle equal to or greater than zero degrees with the flat dirty air face of the second filter cartridge, wherein the second included angle opens in the downward direction towards the dirty air chamber; and a third filter cartridge comprises a flat dirty air face, and wherein the second dirty air flow axis is parallel with the flat dirty air face of the third filter cartridge or forms a third included angle equal to or greater than zero degrees with the flat dirty air face of the third cartridge, wherein the third included angle opens in the downward direction towards the dirty air chamber.

In one or more embodiments of the dust collectors, a fourth filter cartridge comprises a flat dirty air face, and wherein the third dirty air flow axis is parallel with the flat dirty air face of the fourth filter cartridge or forms a fourth included angle equal to or greater than zero degrees with the flat dirty air face of the fourth filter cartridge, wherein the fourth included angle opens in the downward direction towards the dirty air chamber.

In one or more embodiments of the dust collectors, one or more of the first, second, third, and fourth included angles is 75 degrees or less.

In one or more embodiments of the dust collectors, the dust collector further comprises a first pulse jet cleaning system comprising a first plurality of valves configured to deliver pulses of cleaning gas into the first clean air plenum, and a second pulse jet cleaning system comprising a second plurality of valves configured to deliver pulses of cleaning gas into the second clean air plenum.

In one or more embodiments of the dust collectors, clean air exits from the first clean air plenum through a first clean air outlet, and wherein clean air exits from the second clean air plenum through a second clean air outlet.

In a third aspect, one or more embodiments of the methods described herein include using a dust collector as described herein to remove particulates from dirty air.

In another aspect, one or more embodiments of a dust collector as described herein may include: an aperture formed through a tubesheet structure located in a housing; a filter cartridge located in the housing, wherein the filter cartridge is positioned such that air passing through the aperture in the tubesheet structure must pass through the filter cartridge, wherein the tubesheet structure and the filter cartridge separate the housing into a clean air plenum and a dirty air plenum, and wherein air passing through the aperture must pass through the filter cartridge; wherein the dirty air plenum comprises a dirty air channel located above a dirty air chamber, wherein the dirty air channel is located between a dirty air inlet through which dirty air enters the dirty air plenum and the dirty air chamber, wherein the dirty air chamber is located below a top of the filter cartridge, and wherein the dirty air channel defines a dirty air flow axis through the dirty air channel; wherein the clean air plenum comprises an upper clean air chamber located above the top of the filter cartridge and a lower clean air chamber located below the upper clean air chamber and the top of the filter cartridge, wherein the filter cartridge comprises a dirty air face facing away from the lower clean air chamber, and wherein dirty air moving through the dirty air channel from the dirty air inlet to the dirty air chamber along the dirty air flow axis flows past the upper clean air chamber; and wherein dirty air passing downward through the dirty air channel along the dirty air flow axis moves past a top of the filter cartridge before reaching the dirty air chamber; and further wherein the dirty air channel is configured such that dirty air entering the dirty air chamber from the dirty air channel along the dirty air flow axis cannot directly impinge on the dirty air face of the filter cartridge without changing direction in the dirty air chamber.

If used herein, the words "preferred" and "preferably" refer to embodiments described herein that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the terms "comprises" and variations thereof do not have a limiting meaning where these terms appear in the accompanying description. Moreover, "a," "an," "the," "at least one," and "one or more" are used interchangeably herein.

Relative terms such as above, below, left, right, forward, rearward, top, bottom, side, upper, lower, horizontal, vertical, and the like may be used herein and, if so, are from the perspective observed in the particular figure. As used herein, above and below are used with reference to the general direction of gravity as it acts on the components being described.

The above summary is not intended to describe each embodiment or every implementation of the dust collectors and related methods as described herein. Rather, a more complete understanding of the invention will become apparent and appreciated by reference to the following Description of Illustrative Embodiments and claims in view of the accompanying figures of the drawing.

### BRIEF DESCRIPTIONS OF THE FIGURES OF THE DRAWING

FIG. 1 is a front perspective view of one illustrative embodiment of a dust collector as described herein.
FIG. 2 is a rear perspective view of the dust collector of FIG. 1.
FIG. 3 is a front view of the dust collector of FIG. 1, with the front wall of the housing removed to expose the interior of the dust collector.
FIG. 4 is an enlarged front view of the dust collector as depicted in FIG. 3.
FIG. 5 is a perspective view of another illustrative embodiment of a dust collector as described herein.
FIG. 6 is a side view of another illustrative embodiment of a dust collector as described herein.
FIG. 7 is a front view of the dust collector depicted in FIG. 6 (taken from the left side of FIG. 6) with the front portion of the housing removed to expose the interior of the dust collector.
FIG. 8 is a perspective view of one illustrative embodiment of a reverse pulse cleaning system that may be used in a dust collector as described herein.
FIG. 9 is a plan view of the manifold 362 and related components of the reverse pulse cleaning system 360 depicted in FIG. 8.
FIG. 10 is a cross-sectional view of the reverse pulse cleaning system 360 taken along line 10-10 in FIG. 9.
FIG. 11 is an exploded diagram of one illustrative embodiment of a valve that may be used in a reverse pulse cleaning system that may, in turn, be used in a dust collector as described herein.
FIG. 12 is a cross-sectional view of one illustrative embodiment of a diaphragm and an outer cap that may be used in a valve of a reverse pulse cleaning system that may, in turn, be used in a dust collector as described herein.
FIG. 13 is an enlarged cross-sectional view a portion of the diaphragm and outer cap depicted in FIG. 12 during deflection of the diaphragm as described herein.

### DESCRIPTION OF ILLUSTRATIVE EMBODIMENTS

In the following description of illustrative embodiments, reference is made to the accompanying figures of the drawing which form a part hereof, and in which are shown, by way of illustration, specific embodiments. It is to be understood that other embodiments may be utilized and structural changes may be made without departing from the scope of the present invention.

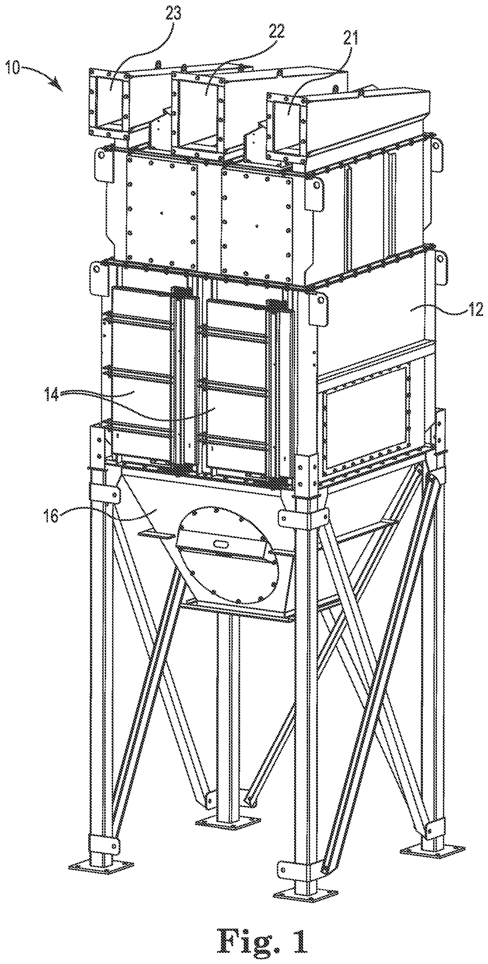

One illustrative embodiment of a dust collector 10 as described herein is depicted in FIGS. 1-4. The dust collector 10 uses filter cartridges to remove dust and other types of particulate from air. In general, the dust collector 10 includes a housing 12 made from sheet metal or other types of materials that are impermeable to air moving through the dust collector 10. The housing 12 may include access doors 14 as depicted in FIG. 1 to allow access to the interior of the housing 12 for replacement of the filter cartridges contained therein, as well as other maintenance requirements.

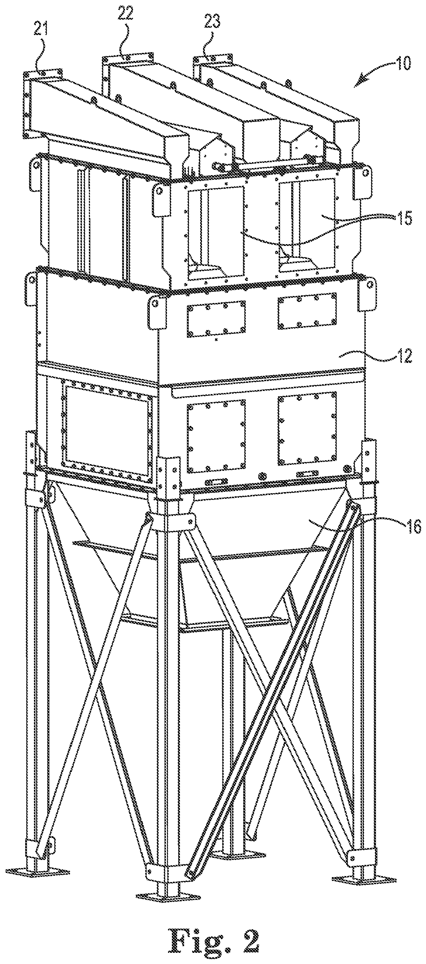

The dust collector 10 as depicted in FIGS. 1 and 2 includes, in one or more embodiments, multiple dirty air inlets 21, 22, and 23. Although the depicted embodiment includes three dirty air inlets, one or more alternative embodiments of dust collectors as described herein may have as few as one dirty air inlet, two dirty air inlets, or four or more dirty air inlets, each of which leads to a dirty air channel in the dust collector as described herein. As best seen in FIG. 2, the dust collector 10 also includes two filtered or clean air outlets 15. Although the depicted embodiment includes two clean air outlets, one or more alternative embodiments of dust collectors as described herein may include as few as one clean air outlet, or three or more clean air outlets.

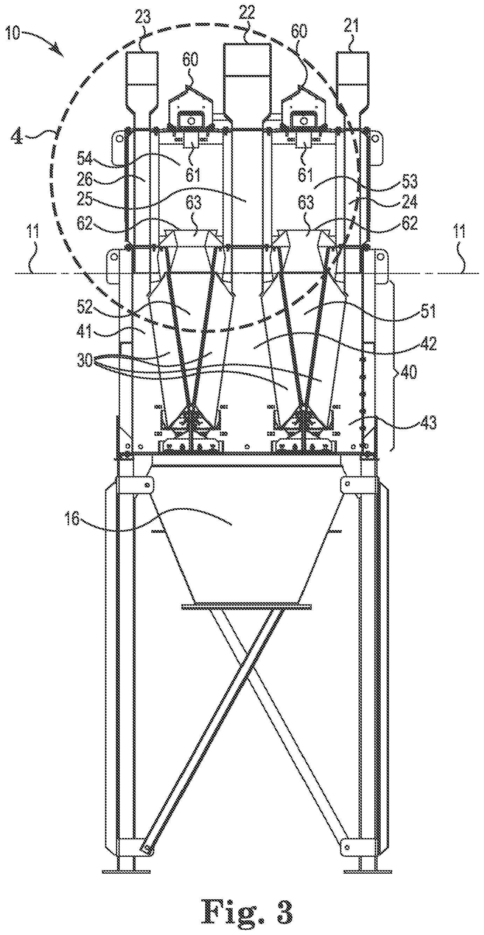

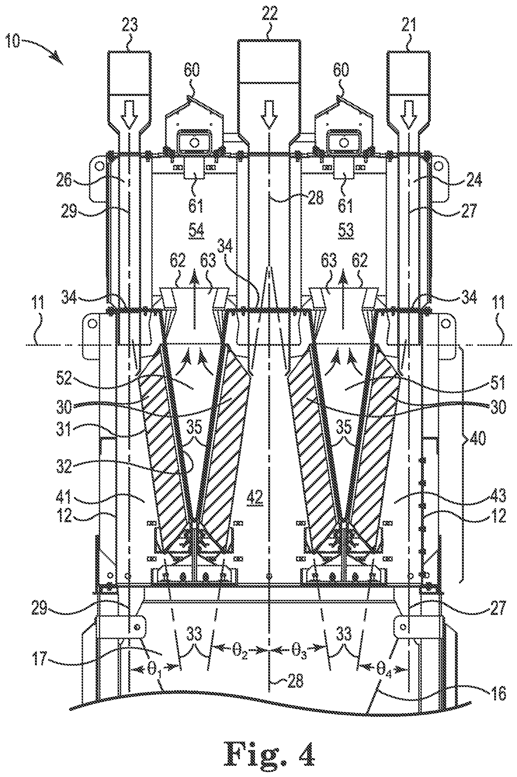

In general, unfiltered or dirty air enters the dust collector 10 through the dirty air inlets 21, 22, and 23. Air filter cartridges 30 (see, e.g., FIGS. 3 and 4) within the dust collector 10 remove dust and other particulate from the dirty air. The dust collected from dirty air flowing through the dust collector 10 falls into the hopper 16 at the bottom of the housing 12 and may be collected in a dust bin or other container located below the hopper 16. The clean, filtered air is exhausted from the dust collector 10 through the clean air outlets 15.

The dust collector 10 includes a tubesheet that separates the interior volume of the dust collector 10 between an unfiltered or dirty air plenum and a filtered or clean air plenum. In one or more embodiments, the tubesheet in the depicted dust collector 10 includes multiple components similar, in many respects, to, e.g., the tubesheet described in connection with International Patent Application No. PCT/US2012/062187 filed on 26 October, 2012 and titled SLIDING FILTER CARTRIDGES, DUST COLLECTORS, AND METHODS (in contrast to tubesheets in some dust collectors that may be flat sheets with apertures formed therein).

The tubesheet structure in the depicted dust collector 10 includes (as illustrated in heavy lines in FIG. 4) an upper wall 34 that includes two apertures 63 in which venturis 62 are located for use in connection with the reverse pulse cleaning system as will be described herein. The tubesheet structure in the dust collector 10 also includes lower walls 35 that extend downward into the volume that is otherwise occupied by the dirty air chamber 40 that forms a part of the dirty air plenum of the dust collector 10 as described herein.

Filter cartridges 30 are located over apertures formed in the lower walls 35 of the tubesheet structure. The filter cartridges 30 are positioned such that air passing through the apertures in the lower walls 35 of the tubesheet structure must pass through at least one of the filter cartridges 30 when moving from the dirty air plenum to the clean air plenum as described herein. In other words, the tubesheet structure (including upper wall 34 and lower walls 35), along with the filter cartridges 30, separates the dirty air plenum from the clean air plenum in a manner similar to conventional tubesheets.

Because of the relatively complex nature of the tubesheet structure, the dirty air plenum and the clean air plenum will be described with respect to the various portions or volumes that, together, make up the dirty air plenum and the clean air plenum.

With respect to the dirty air plenum of the illustrative embodiment of a dust collector 10 as seen in FIGS. 1-4, dirty air inlets 21, 22, and 23 are provided in the dust collector 10 and the lead, respectively, to dirty air channels 24, 25, and 26 that deliver dirty air passing through the dirty air inlets 21, 22, and 23 into the dirty air chamber 40. In other words, the dirty air channels 24, 25, and 26 can be described as being located between their respective dirty air inlet and dirty air chamber 40. In one or more embodiments, the dirty air chamber 40 may be described as being located below the tops of the filter cartridges 30 which, as seen in, e.g., FIGS. 3 and 4, i.e., are located below line 11 as depicted in those figures. As seen in, e.g., FIGS. 3-4, the dirty air chamber 40 includes portions located between the sidewalls of the housing 12 and filter cartridges 30. In particular, volume 41 is located on the leftmost side of the views depicted in FIGS. 3-4, while volume 42 is located in the middle of the views depicted in FIGS. 3-4, and volume 43 is located on the rightmost side of those figures. Volume 17 (see, e.g., FIG. 4) located within hopper 16 may also be considered to form a portion of the dirty air chamber 40 in one or more embodiments of dust collectors as described herein.

The clean air plenum of the illustrative embodiment of dust collector 10 as seen in FIGS. 1-4 includes a lower clean air chamber 51 located between the filter cartridges 30 on the right side of the housing 12 in FIGS. 3 and 4, a lower clean air chamber 52 located between the filter cartridges on the left side of the housing 12 in FIGS. 3 and 4. Upper clean air chamber 53 is located above lower clean air chamber 51, and upper clean air chamber 54 located above lower clean air chamber 52. Together, the lower clean air chambers 51 and 52, along with the upper clean air chambers 53 and 54, make up the clean air plenum of the dust collector 10.

In one or more embodiments, the lower clean air chamber 51 and the upper clean air chamber 53 located above the lower clean air chamber 51 may be described as forming a first clean air plenum in the illustrative embodiment of dust collector 10. The lower clean air chamber 52 and the upper clean air chamber 54 located above the lower clean air chamber 52 may be described as forming a second clean air plenum in the illustrative embodiment of dust collector 10. In one or more embodiments, the first clean air plenum may be separate and independent from the second clean air plenum, such that air in the first clean air plenum (which includes, in the depicted embodiment, the lower clean air chamber 51 and upper clean air chamber 53) cannot move into the second clean air plenum (which includes, in the depicted embodiment, the lower clean air chamber 52 and upper clean air chamber 54). In embodiments including multiple clean air plenums that are separate and independent from each other, the dust collectors may include separate and independent clean air outlets such as, e.g., the pair of clean air outlets 15 depicted in FIG. 2.

In one or more embodiments, the upper clean air chambers 53 and 54 may be described as being located above the tops of the filter cartridges 30 as well as their respective lower clean air chamber 51 or 52. As noted above, the tops of the filter cartridges 30 are also denoted in FIGS. 3 and 4 by line 11. Although the tops of all of the filter cartridges 30 are positioned at the same height in the illustrative embodiment depicted in FIGS. 3-4, in one or more alternative embodiments the filter cartridge tops may be located at different heights.

As described herein, the tubesheet structure (including upper wall 34 and lower walls 35 in the illustrative embodiment of FIGS. 3-4) and the filter cartridges 30 located over apertures formed in the lower walls 35 are positioned such that air passing through the apertures in the lower wall 35 of the tubesheet structure must pass through at least one of the filter cartridges 30 when moving from the dirty air plenum into the clean air plenum of the dust collector 10. That air flow is seen in arrows located within the lower clean air chamber 51 and the lower clean air chamber 52.

In the arrangement of filter cartridges 30 as positioned on the tubesheet structure including upper wall 34 and lower walls 35, the clean air faces 32 of the filter cartridges 30 may be described as facing the lower clean air chambers 51 or 52. In one or more embodiments, the clean air face 32 of one of the filter cartridges 30 may be described as facing the clean air face 32 of an opposing filter cartridge 30 located across each of the lower clean air chambers 51 or 52.

In one or more embodiments of dust collectors as described herein, each of the dirty air channels may be described as defining a dirty air flow axis. Further, the filter cartridges may be described as having dirty air faces that face those dirty air flow axes. With respect to the illustrative embodiment depicted in FIG. 4, for example, the leftmost dirty air channel 26 may be described as defining a dirty air flow axis 29 (that, in FIG. 4, is largely vertical). The leftmost filter cartridge 30 may be described as having a dirty air face 31 facing the dirty air flow axis 29. As used in connection with the dirty air channels of dust collectors as described herein, a "dirty air flow axis" is an axis that is aligned with the general direction of airflow through the dirty air channel when the dust collector is operating at its rated volumetric capacity, i.e., when air is directed into the dirty air inlet leading into the dirty air channel and forced through the filter cartridges located over the apertures in the tubesheet structure.

In one or more embodiments, the dirty air channels 24, 25, and 26 may be configured such that dirty air entering the dirty air chamber 40 from each of the dirty air channels 24, 25, and 26 along their respective dirty air flow axes 27, 28, or 29 cannot directly impinge on any of the dirty air faces 31 of the filter cartridges in the dirty air chamber 40 without changing direction in the dirty air chamber 40. Such an arrangement may, in one or more embodiments, be advantageous in that particulate matter that may be entrained in the dirty air flow moving along the dirty air flow axes may be less likely to directly impinge on the filter material forming the dirty air faces of the filter cartridges while moving at those presumably higher velocities immediately upon leaving the dirty air channels. Limiting direct, higher velocity contact of particulates on the filter media may, in one or more embodiments, enhance the service life of filter cartridges in dust collectors as described herein.

As illustrated by axis 33 in FIG. 4, the dirty air face 31 of the filter cartridge 30 facing the dirty air flow axis 29 may, in one or more embodiments, form an included angle θ₁ with the dirty air flow axis 29 that greater than zero degrees (0°). In one or more embodiments, the dirty air face 31 may be described as forming an included angle θ₁ with the dirty air flow air axis 29 that is greater than zero degrees.

Similar arrangements may, in one or more embodiments, be described with respect to the dirty air faces 31 of the left side filter cartridge 30 volume 42 of the dirty air chamber 40 and the right side filter cartridge 30 facing volume 42 of the dirty air chamber 40. Dirty air channel 25 provides dirty air into the volume 42 along dirty air flow axis 28. The dirty air faces of the filter cartridges 30 facing the dirty air flow axis 28 may, in one or more embodiments, form included angles θ₂ and θ₃ with the dirty air flow axis 28 that are greater than zero degrees (0°). In one or more embodiments, the dirty air faces of the filter cartridges 30 facing the volume 42 may be described as forming an included angle θ₂ or θ₃ with the dirty air flow axis 28 that is greater than zero degrees.

The rightmost dirty air channel 25 may be described as defining a dirty air flow axis 27 and the rightmost filter cartridge 30 may be described as having a dirty air face facing that dirty air flow axis 27. As illustrated by axis 33, the dirty air face of the filter cartridge 30 facing the dirty air flow axis 27 may, in one or more embodiments, form an included angle θ₄ with the dirty air flow axis 27 that is greater than zero degrees (0°). In one or more embodiments, the dirty air face of the filter cartridge 30 facing the dirty air flow axis 27 may be described as forming an included angle θ₄ with the dirty air flow axis 27 that is greater than zero degrees.

In one or more embodiments of dust collectors as described herein, the included angles formed by the dirty air faces of the filter cartridges with the dirty air flow axes they face may be described as opening in the downward direction towards the dirty air chambers of the dust collectors.

In one or more embodiments of dust collectors as described herein, the included angles (e.g., θ₁, θ₂, θ₃, and θ₄) formed by the dirty air faces of the filter cartridges with the dirty air flow axes (e.g., 27, 28, and 29) they face may be 75 degrees or less. In one or more alternative embodiments, the included angles may be 45 degrees or less, and in one or more other alternative embodiments, the included angles may be 30 degrees or less.

In one or more embodiments, the dirty air faces of the filter cartridges used in dust collectors as described herein may be described as being flat dirty air faces. As used herein with respect to the dirty air faces of filter cartridges, the term "flat" means that the dirty air face of the filter cartridge lies substantially in or near a plane, not that the dirty air face is perfectly planar. Some potentially illustrative embodiments of filter cartridges having flat dirty air faces may be described and depicted in US Patent Nos. 5,772,883; 5,820,646; and 7,282,075.

In the arrangement of features as depicted in the illustrative embodiment of dust collector 10, dirty air passing through the dirty air channels 24, 25, and 26 along the dirty air flow axes 27, 28, and 29 moves past the tops of the filter cartridges 30 before reaching the dirty air chamber 40. In particular, the dirty air passing through dirty air channel 24 (from dirty air inlet 21 and along the dirty air flow axis 27) moves past the top of the rightmost filter cartridge 30 as seen in FIGS. 3-4. Similarly, dirty air passing through dirty air channel 25 (from dirty air inlet 22 and along the dirty air flow axis 28) moves past the tops of the two middle filter cartridges 30 as seen in FIGS. 3-4. Also, dirty air passing through the dirty air channel 26 (from the dirty air inlet 23 and along the dirty air flow axis 29) moves past the top of the leftmost filter cartridge 30 as seen in FIGS. 3-4.

In one or more embodiments of dust collectors as described herein, dirty air moving through the dirty air channels along the dirty air flow axes 27, 28, and 29 may be described as flowing past the upper clean air chambers 53 and 54 before flowing past the tops of the filter cartridges 30. Such an arrangement may, in one or more embodiments, provide advantages in enhancing the compactness of the dust collectors as described herein, as well as being conducive to orienting the dirty flow axes relative to the dirty air faces of the filter cartridges as described herein. In the illustrative embodiment depicted in, e.g., FIGS. 3 and 4, the dirty air channel 27 may be described as being located on a first side of upper clean air chamber 53, while the dirty air channel 28 may be described as being located on a second side of upper clean air chamber 53. Similarly, dirty air channel 28 may be described as being located on a first side of upper clean air chamber 54, while the dirty air channel 29 may be described as being located on a second side of the upper clean air chamber 54.

When being used to remove particulate matter from air, the filter cartridges 30 become loaded with that particulate matter. One or more embodiments of the dust collectors as described herein may include a reverse pulse cleaning system that is constructed and arranged to emit pulses of air or another gas into the clean air plenum. In particular, the illustrative embodiment of dust collector 10 includes two reverse pulse cleaning systems 60 located above the upper clean air chambers 53 and 54. Each of the reverse pulse cleaning systems 60 includes one or more valves 61 configured to direct pulses of gas downward through the clean air chambers 53 and 54 into and through openings 63 in the upper wall 34 of the tubesheet structure. In one or more embodiments, the dust collectors described herein may include one or more venturis 62 positioned in the upper wall 34. Those venturis 62 may define the openings 63 and help collect and distribute the pulses from the valves 61 towards clean air faces 32 of the filter cartridges 30 of the dust collector 10.

The pulses delivered from the valves 61 through upper clean air chambers 53 and 54 and openings 63 pass through the lower clean air chambers 51 and 52 where they reach the clean air faces 32 of each of the filter cartridges 30. As described herein, clean air faces 32 of the filter cartridges 30 are the surfaces of the filter cartridges 30 that face into the lower clean air chambers 51 and 52 of the clean air plenum.

The pulses delivered from the valves 61 pass through the clean air faces 32 of the filter cartridges 30 to the dirty air faces 31 of the filter cartridges 30. By pulsing air (or another gas or gasses) from the clean air faces 32 through the dirty air faces 31, at least a portion of the dust and other debris clogging the dirty air faces 31 of the air filter cartridges 30 may be dislodged and/or knocked loose from the filter cartridges 30. The dislodged dust and debris falls by gravity into the dust collection hopper 16 where it may collect in, e.g., a collector bin or other receptacle located below the filter cartridges 30.

In one or more embodiments of dust collectors as described herein, the dirty air channels may be described as being separate and independent from each other. For example, the dirty air channel 27 may be separate and independent of the dirty air channel 28 such that dirty air passing through dirty air channel 27 must enter the dirty air chamber 40 before it could enter the dirty air channel 28 (it being understood that in normal operation where dirty air is entering the dust collector through both dirty air channel 27 and dirty air channel 28 such flow would not typically be encountered). Similarly, dirty air passing through the dirty air channel 28 into the dirty air chamber 40 must also enter the dirty air chamber 40 before it could enter the dirty air channel 27.

In one or more embodiments of the dust collectors described herein, the dirty air inlets through which dirty air passes into the dirty air plenum may also be described as being separate and independent of each other. For example, in the illustrative embodiment of dust collector 10 depicted in FIGS. 1-4, the dirty air inlet 21 of dirty air channel 24 is separate and independent of the dirty air inlets 22 and 23 of, respectively, dirty air channels 25 and 26. Because the dirty air inlets are separate and independent of each other, dirty air passing through the dirty air inlet 21 cannot enter either of the dirty air channels 25 or 26 without first passing through the dirty air chamber 40 (although it should be understood that in typical operation, where dirty air is flowing into dirty air chamber 40 from each of the dirty air channels, such reverse flow will typically not be experienced).

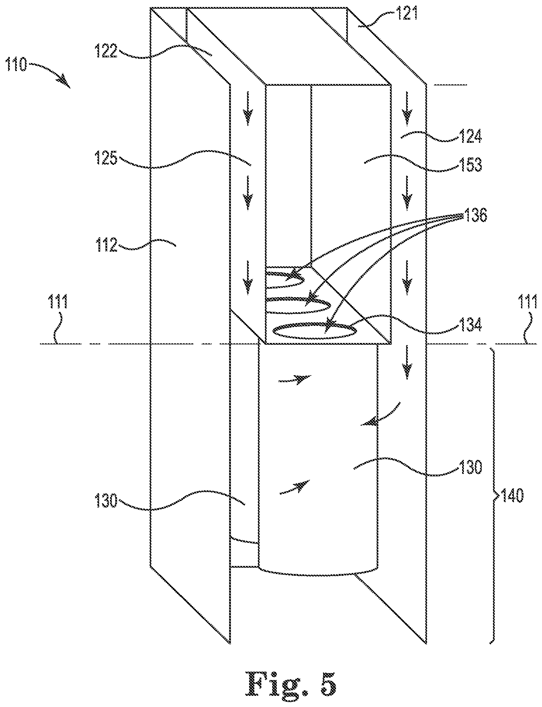

Referring to FIG. 5, one alternative illustrative embodiment of a dust collector 110 is depicted. The illustrative embodiment of dust collector 110 includes a housing 112 in which filter cartridges 130 are attached to a tubesheet 134. The tubesheet 134 separates the housing 112 into a dirty air plenum and a clean air plenum in a manner similar to the tubesheet structure described in connection with the illustrative embodiment of dust collector 10 depicted in FIGS. 1-4.

The dirty air plenum portion of the dust collector 110 includes dirty air channels 124 and 125 through which dirty air flows into a dirty air chamber 140 located below tubesheet 134. Dirty air enters each of the dirty air channels 124 and 125 through one of the dirty air inlets 121 and 122.

The tubesheet 134 of the illustrative embodiment of dust collector 110 includes apertures 136. Filter cartridges 130, also located in the housing 112, are, in one or more embodiments, positioned such that air passing through the apertures 136 in the tubesheet 134 must pass through at least one of the filter cartridges 130. In the depicted embodiment, the filter cartridges 130 may be described as being generally tubular. As a result, each of the filter cartridges 130 defines a lower clean air chamber within its enclosed volume and below the aperture 136 over which the filter cartridge 130 is attached. The filter cartridges 130 may also be described as having a clean air face facing inward towards the lower clean air chamber defined within each of the filter cartridges 130, as well as a dirty air face facing outward away from the lower clean air chamber and towards the surrounding walls of the housing 112 of the dust collector 110 within the dirty air chamber 140.

An upper clean air chamber 153 is located above the lower clean air chambers in each of the filter cartridges 130 as well as above the tubesheet 134 and its apertures 136. The lower clean air chambers located in each of the filter cartridges 130 may be described, in one or more embodiments, as being located below the upper clean air chamber 153. The lower clean air chambers in each of the filter cartridges 130 and the upper clean air chamber 153 may be described as, together, constituting the clean air plenum of the illustrative embodiment of dust collector 110.

In the depicted embodiment of dust collector 110, dirty air moving through the dirty air channels 124 and 125 along the dirty air flow axes defined by those channels may be described as flowing past the upper clean air chamber 153 before reaching the dirty air chamber 140. In one or more embodiments, the dirty air chamber 140 may be described as being located below the tops of the filter cartridges 130 which, in the depicted embodiment, are located along a line 111 as seen in FIG. 5. In a similar manner, dirty air passing through the dirty air channels 124 and 125 may be described as moving past the tops of the filter cartridges 130 before reaching the dirty air chamber 140 in the dust collector 110.

In one or more embodiments, the dirty air channels 124 and 125 may be configured such that dirty air entering the dirty air chamber 140 from each of the dirty air channels 124 and 125 along their respective dirty air flow axes cannot directly impinge on any of the dirty air faces of the filter cartridges 130 in the dirty air chamber 140 without changing direction in the dirty air chamber 140. Such an arrangement may, in one or more embodiments, be advantageous in that particulate matter that may be entrained in the dirty air flow moving along the dirty air flow axes may be less likely to directly impinge on the filter material forming the dirty air faces of the filter cartridges while moving at those presumably higher velocities immediately upon leaving the dirty air channels. Limiting direct, higher velocity contact of particulates on the filter media may, in one or more embodiments, enhance the service life of filter cartridges in dust collectors as described herein.

In one or more embodiments, the portions of the dirty air faces of the filter cartridges 130 facing the dirty air flow axes defined by the dirty air flow channels 124 and 125 may form included angles with the dirty air flow axes that are greater than zero degrees (0°). In one or more embodiments, the dirty air faces of the filter cartridges 130 may be described as forming included angles with the dirty air flow axes that are greater than zero degrees.

In one or more embodiments of dust collectors similar to illustrative dust collector 110, the included angles formed by the dirty air faces of the filter cartridges 130 with the dirty air flow axes they face may be described as opening in the downward direction towards the dirty air chamber 140.

In one or more embodiments of dust collectors as described herein, the included angles formed by the dirty air faces of the filter cartridges 130 with the dirty air flow axes defined by the dirty air flow chambers 124 and 125 they face may be 75 degrees or less. In one or more alternative embodiments, the included angles may be 45 degrees or less, and in one or more other alternative embodiments, the included angles may be 30 degrees or less.

Although the depicted embodiment of dust collector 110 includes three filter cartridges 130 and corresponding apertures 136 in tubesheet 134, in one or more alternative embodiments, the dust collector may include as few as one filter cartridge, two filter cartridges, or four or more filter cartridges. Furthermore, although each filter cartridge 130 is depicted as being located over its own single aperture 136, in one or more alternative embodiments, a filter cartridge 130 may be located over two or more apertures in a tubesheet.

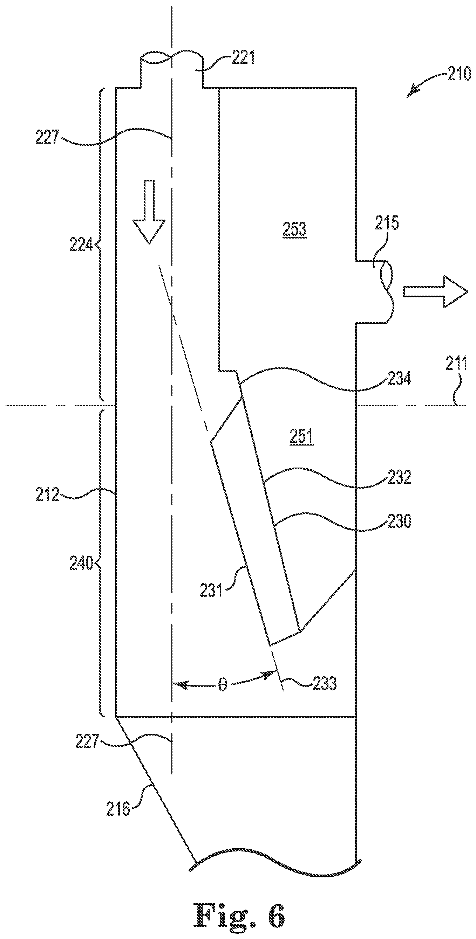

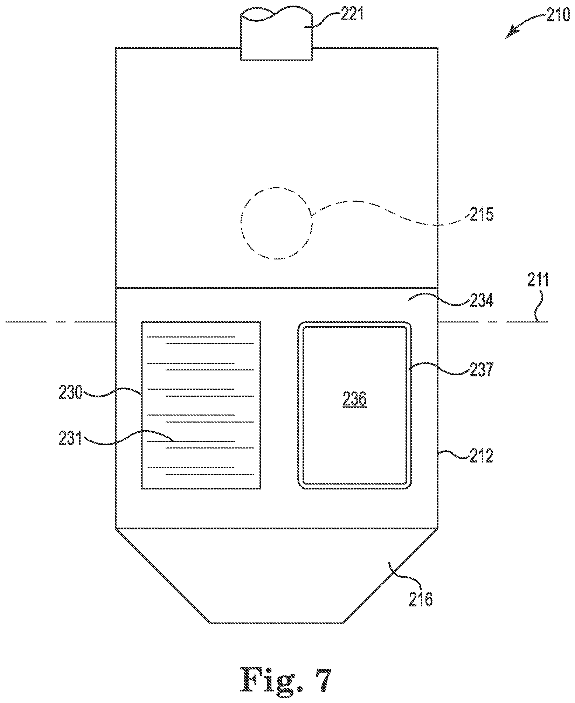

Another illustrative embodiment of a dust collector 210 is depicted in FIGS. 6 and 7. The dust collector 210 uses filter cartridges 230 to remove dust and other types of particulate from air. The dust collector 210 also includes a housing 212 with dirty air entering the housing 212 through a dirty air inlet 221 and clean air leaving the housing 212 through clean air outlet 215. A hopper 216 is located below the filter cartridges 230. A tubesheet 234 separates the housing 212 into a dirty air plenum and a clean air plenum.

In the illustrative embodiment of dust collector 210, dirty air plenum includes both a dirty air channel 224 and a dirty air chamber 240. Dirty air entering the dust collector 210 through dirty air inlet 221 passes through dirty air channel 224 on its way to dirty air chamber 240. As in the other illustrative embodiments of dust collectors as described herein, the dirty air chamber 240 may be described as being located below the tops of the filter cartridges 230 provided in the dust collector 210. Dirty air channel 224 may, as also described in connection with other illustrative embodiments described herein, define a dirty air flow axis 227 along which dirty travels when entering the dirty air chamber 240.

The clean air plenum, in the illustrative embodiment of dust collector 210, includes a lower clean air chamber 251 and an upper clean air chamber 253. The upper clean air chamber 253 may be described, in one or more embodiments, as being located above a top of the filter cartridges 230 and the lower clean air chamber 251 may be described as being located below the upper clean air chamber 253 and the tops of the filter cartridges 230 (with those tops being, in the depicted illustrative embodiment, aligned with the line 211).

Given their relative positions in the dust collector 210, dirty air moving through the dirty air channel 224 along the dirty air flow axis 227 from the dirty air inlet 221 to the dirty air chamber 240 flows past the upper clean air chamber 253. The dirty air passing through the dirty air channel 224 along the dirty air flow axis 227 may also be described as moving past the tops of the filter cartridges 230 before reaching the dirty air chamber 240.

The tubesheet 234 includes apertures 236 through which air passes when moving from the dirty air chamber 240 of the dirty air plenum into the clean air plenum 250. In the view seen in FIG. 7, one of the apertures 236 is depicted as uncovered by a filter cartridge 230 while a second aperture is covered by filter cartridge 230. Because the filter cartridges are located over apertures 236 in the tubesheet 234, air passing through the apertures 236 from the dirty air plenum into the clean air plenum must pass through at least one of the filter cartridges 230. Although the illustrative embodiment of dust collector 210 includes two filter cartridges 230 and corresponding apertures 236 in tubesheet 234, in one or more embodiments, the dust collectors described herein may include any number of filter cartridges, with each filter cartridge being located over one or more apertures in a tubesheet.

The aperture 236 in the tubesheet 234 includes, in the depicted embodiment, a gasket or other sealing mechanism 237 that may be used to seal the filter cartridge over the opening 236 such that dirty air must pass through the filter cartridges before entering the clean air plenum. Such gaskets or other seal structures are known and will not be described further herein.

The filter cartridge 230 depicted in, e.g., FIG. 6, includes a dirty air face 231 facing the dirty air chamber 240 of the dirty air plenum and a clean air face 232 facing the lower clean air chamber 251 of the clean air plenum. As described herein, one or more embodiments of the dust collectors may include dirty air channels that define one or more dirty air flow axes. With respect to the illustrative embodiment of dust collector 210 depicted in FIG. 6, for example, the dirty air channel 224 may be described as defining a dirty air flow axis 227. The filter cartridges 230 may be described as having dirty air faces 231 facing the dirty air flow axis 227.

In one or more embodiments, the dirty air channel 224 may be configured such that dirty air entering the dirty air chamber 240 from the dirty air channel 224 along the dirty air flow axis 227 cannot directly impinge on the dirty air faces 231 of the filter cartridges 230 in the dirty air chamber 240 without changing direction in the dirty air chamber 240. Such an arrangement may, in one or more embodiments, be advantageous in that particulate matter that may be entrained in the dirty air flow moving along the dirty air flow axes may be less likely to directly impinge on the filter material forming the dirty air faces of the filter cartridges while moving at those presumably higher velocities immediately upon leaving the dirty air channels. Limiting direct, higher velocity contact of particulates on the filter media may, in one or more embodiments, enhance the service life of filter cartridges in dust collectors as described herein.

As illustrated by axis 233 in FIG. 6, the dirty air face 231 of a filter cartridge 230 facing the dirty air flow axis 227 may, in one or more embodiments, form an included angle θ with the dirty air flow axis 227 that greater than zero degrees (0°). In one or more embodiments, the dirty air face 231 may be described as forming an included angle θ with the dirty air flow air axis 227 that is greater than zero degrees.

In one or more embodiments of dust collectors as described herein, the included angles formed by the dirty air faces 231 of the filter cartridges 230 with the dirty air flow axis 227 they face may be described as opening in the downward direction towards the dirty air chamber 240.

In one or more embodiments of dust collectors as described herein, the included angles formed by the dirty air faces 231 of the filter cartridges 230 with the dirty air flow axis 227 they face may be 75 degrees or less. In one or more alternative embodiments, the included angles may be 45 degrees or less, and in one or more other alternative embodiments, the included angles may be 30 degrees or less.

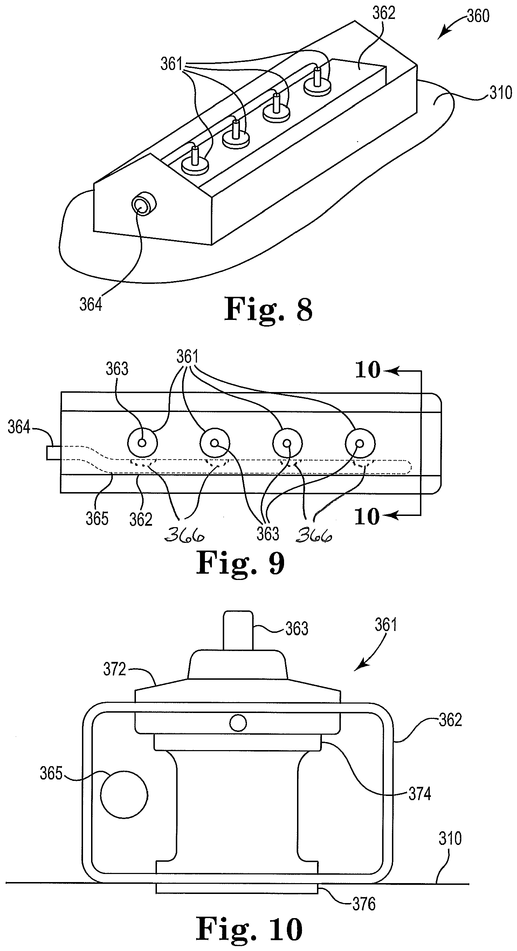

In one or more embodiments, the reverse pulse cleaning system may include one or more valves designed to deliver air (or another gas) into the clean air plenum of a dust collector as described herein. One illustrative embodiment of a reverse pulse cleaning system 360 that may be used in connection with the dust collectors described herein is depicted in FIGS. 8-13. The reverse pulse cleaning system 360 includes a manifold 362 in which valves 361 are mounted. The valves 361 are used to supply high pressure air from the manifold 362 into the clean air plenum of a dust collector 310 as described herein.

The manifold 362 receives compressed air (or another gas) through an inlet 364. In one or more embodiments, the manifold 362 may be fed through a distribution plenum 365 (in the form of, e.g., a pipe, tube, etc.) that extends from the inlet 364 along a length of the manifold 362. The distribution plenum 365 may include multiple orifices 366 so that compressed gas being delivered into the manifold 362 is distributed over at least a portion of the length of the manifold 362. In one or more embodiments, the orifices 366 provided in the distribution plenum 365 may be located and oriented to provide compressed gas directed toward or that otherwise directly impinges on the valves 361 located in the manifold 362. As used herein, "directly impinges" means that compressed gas leaving the distribution plenum through the orifice impinges on a first valve before that same compressed gas contacts a second valve.

In one or more embodiments, the distribution plenum used in a reverse pulse cleaning system of a dust collector as described herein may be described as including two or more orifices, wherein the two or more orifices are configured to deliver compressed gas that directly impinges on two or more valves in a manifold of the reverse pulse cleaning system during recharging of compressed gas in the manifold after compressed gas has been released from the manifold through the valves. In one or more embodiments, the distribution plenum may include a plurality of orifices, wherein at least one orifice of the plurality of orifices is configured to deliver compressed gas that directly impinges on each valve of two or more valves in the manifold of the reverse pulse cleaning system during recharging of compressed gas in the manifold after compressed gas has been released from the manifold through the two or more valves.

In one or more alternative embodiments, the distribution plenum may be located outside of the manifold (as opposed to the distribution plenum 365 located in the manifold 362 as depicted in FIGS. 9 and 10), with the distribution plenum including multiple orifices that deliver compressed gas into the manifold at multiple locations configured to provide compressed gas that directly impinges on each valve of two or more valves in the manifold of the reverse pulse cleaning system during recharging of compressed gas in the manifold after compressed gas has been released from the manifold through the two or more valves.

Delivering compressed gas to the manifold 362 over multiple locations within the manifold may, in one or more embodiments, improve temperature control of the valves 361 and any components contained therein.

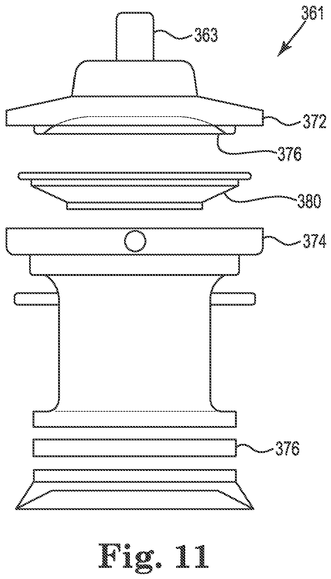

One illustrative embodiment of a valve 361 is depicted in the manifold 362 in the view depicted in FIG. 10, and the valve 361 is also depicted in an exploded diagram in FIG. 11. As seen in FIG. 10, the manifold 362 is mounted on the dust collector 310 such that compressed gas is delivered from the manifold 362 into the dust collector 310 through the valve 361. The distribution pipe 365 is also seen in the manifold 362 in the view depicted in FIG. 10.

The valve 361 includes a housing 374 which is located within the manifold 362, and outer cap 372 and a lower cap 376. The outer cap 372 forms a seal with the manifold 362 located between the housing 374 and the outer cap 372. At the other end of the housing 374, the inner cap 376 forms a seal with the manifold 362 located between the housing 374 and the inner cap 376.

The valves 361 used in the reverse pulse cleaning systems of dust collectors as described herein may, in one or more embodiments, include a flexible diaphragm 380 as depicted in the exploded diagram of FIG. 11. In many respects, the diaphragm 380 in the valves 361 of reverse pulse cleaning systems as described herein function similar to those diaphragms seen in other diaphragm valves used in similar applications. The valve 361 includes a solenoid exhaust valve 363 which, when opened, allows compressed gas within the manifold 362 to pass through the valve housing 374 into the clean air plenum of the dust collector 310.

In particular, opening of the solenoid exhaust valve 363 causes pressure above the diaphragm 360 to fall rapidly and, as a result, the pressure from compressed gas below the diaphragm 380 (i.e., between the diaphragm 380 and the housing 374) forces the diaphragm 380 upward towards the outer cap 372. That movement of the diaphragm 380 which allows compressed gas within the manifold 362 to pass through the housing 374 into the clean air plenum of dust collector 310. The diaphragm 380 typically includes one or more bleed holes located therein which, upon closing of the solenoid exhaust valve 363, allows pressure to equalize on both sides of the diaphragm 380, thus allowing the diaphragm 380 to return to its sealed position in which compressed gas in the manifold 362 is not allowed to pass through the housing 374 into the dust collector 310.

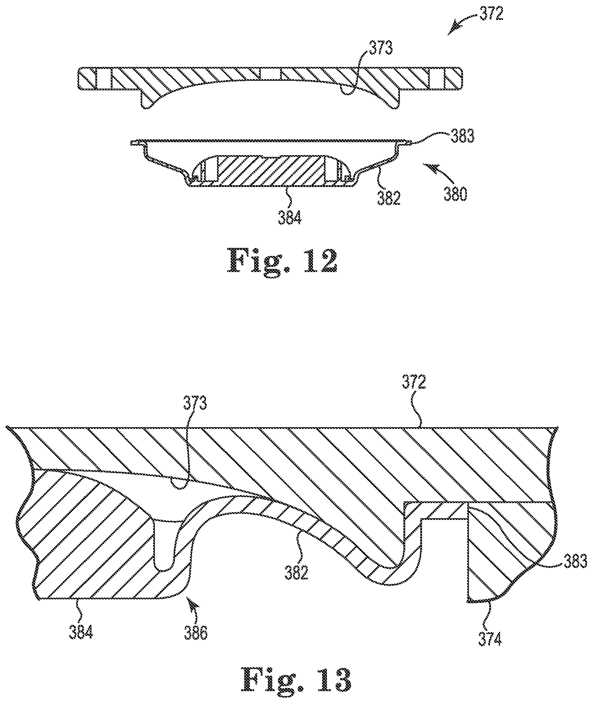

In one or more embodiments of the valves as used in reverse pulse cleaning systems described herein, the outer cap 372 may be shaped to provide enhanced support of the diaphragm 380 when the diaphragm 380 is deflected into its position upward or towards the outer cap 372. Referring to, e.g., FIGS. 12 and 13, the diaphragm 380 is depicted in its undeflected or sealed position in FIG. 12 and separated from the outer cap 372. The diaphragm 380 includes a web 382 which supports the sealing body 384 to the outer perimeter 383 of the diaphragm 380. The outer cap 372 includes a support surface 373 against which the web 382 rests during deflection of the sealing body 384.

In particular, as best seen in the enlarged cross-sectional view of FIG. 13, the web 382 rests against the support surface 373 which supports the web 382 in a manner that reduces plastic or permanent deformation of the web 382 during repeated cycling of the diaphragm 380 during operation of the valve 361. Further improvements in the durability of the diaphragm 380 may be accomplished by providing a transition between the web 382 and the sealing body 384 in which the thickness of the web 382 increases gradually to the area 386 at which the web 382 transitions into the sealing body 384. Providing for gradual transitions between the stiffness of the sealing body 384 and the web 382 may, in one or more embodiments, reduce stress concentrations that may potentially lead to early failure of the diaphragm 380.

In one or more embodiments of the dust collectors as described herein, the arrangement and orientation of the dirty air flow axes defined by dirty air flow channels may be described as not intersecting any dirty air faces of filter cartridges contained in the dirty air chambers of the dust collectors.

Specific construction details with respect to the filter cartridges described herein may vary. Examples of some potential suitable filter cartridge constructions including, e.g., media packs and frames/structures containing the media packs may be found in one or more of the following documents: U.S. Patent Nos. 4,925,561; 5,049,326; 5,562,825; 5,613,992; 5,772,883; 5,792,247; 5,820,646; 5,895,574; 5,902,364; 6,039,778; 6,179,890; 6,190,432; 6,210,469; 6,235,195; 6,350,296; 6,673,136; 7,282,075; 7,959,702; Des. 396,098; Des. 398,046; Des. 399,944; Des. 428,128; and Des. 437,401; International Publications WO 1997/040918; WO 2004/007054; WO 2004/082795; and US Patent Application Publications US 2006/0091084; US 2010/0078379; and US 2009/0127211.

## Claims

1. A dust collector comprising:
an aperture formed through a tubesheet structure (34, 35; 134; 234) located in a housing (12; 112; 212);
a filter cartridge (30; 130; 230) located in the housing (12; 112; 212), wherein the filter cartridge (30; 130; 230) is positioned such that air passing through the aperture in the tubesheet structure (34, 35; 134; 234) must pass through the filter cartridge (30; 130; 230), wherein the tubesheet structure (34, 35; 134; 234) and the filter cartridge (30; 130; 230) separate the housing (12; 112; 212) into a clean air plenum and a dirty air plenum;
wherein the dirty air plenum comprises a dirty air channel (24, 25, 26; 124, 125; 224) located above a dirty air chamber (40; 140; 240), wherein the dirty air channel (24, 25, 26; 124, 125; 224) is located between a dirty air inlet through which dirty air enters the dirty air plenum and the dirty air chamber (40; 140; 240), wherein the dirty air chamber (40; 140; 240) is located below a top of the filter cartridge (30; 130; 230), and wherein the dirty air channel (24, 25, 26; 124, 125; 224) defines a dirty air flow axis through the dirty air channel;
wherein the clean air plenum comprises an upper clean air chamber (53, 54; 153; 253) located above the top of the filter cartridge (30; 130; 230) and a lower clean air chamber (51, 52; 251) located below the upper clean air chamber (53, 54; 153; 253) and the top of the filter cartridge (30; 130; 230), wherein the filter cartridge (30; 130; 230) comprises a dirty air face (31; 231) facing away from the lower clean air chamber (51, 52; 251), and wherein dirty air moving through the dirty air channel (24, 25, 26; 124, 125; 224) from the dirty air inlet to the dirty air chamber (40; 140; 240) along the dirty air flow axis flows past the upper clean air chamber (53, 54; 153; 253); and
wherein dirty air passing downward through the dirty air channel (24, 25, 26; 124, 125; 224) along the dirty air flow axis moves past a top of the filter cartridge (30; 130; 230) before reaching the dirty air chamber; wherein the dirty air channel (24, 25, 26; 124, 125; 224) is configured such that dirty air entering the dirty air chamber (40; 140; 240) from the dirty air channel (24, 25, 26; 124, 125; 224) along the dirty air flow axis cannot directly impinge on the dirty air face (31; 231) of the filter cartridge (30; 130; 230) without changing direction in the dirty air chamber; and
a portion of the dirty air face (31; 231) of the filter cartridge (30; 130; 230) faces the dirty air flow axis, **characterized in that** the dirty air flow axis forms an included angle greater than zero degrees with the portion of the dirty air face (31; 231) of the filter cartridge (30; 130; 230), and wherein the included angle opens in the downward direction towards the dirty air chamber (40; 140; 240).

2. A dust collector according to claim 1, wherein the lower clean air chamber (51, 52; 251) of the clean air plenum is located below the top of the filter cartridge (30; 230) and the aperture in the tubesheet, wherein a clean air face (32; 232) of the filter cartridge (30; 230) faces the lower clean air chamber (51, 52; 251), and wherein the dirty air face (31; 231) of the filter cartridge (30; 230) faces away from the lower clean air chamber (51, 52; 251).

3. A dust collector according to claim 1, wherein the dirty air flow axis forms an included angle of 75 degrees or less with the portion of the dirty air face (31; 231) of the filter cartridge (30; 230).

4. A dust collector according to claim 1, wherein the aperture formed through the tubesheet structure (34, 35; 134) comprises a first aperture of a plurality of apertures formed through the tubesheet structure (34, 35; 134), and wherein the plurality of apertures comprises a second aperture;
wherein the filter cartridge (30; 130) comprises a first filter cartridge (30; 130) of a plurality of filter cartridges (30; 130) located in the housing (12; 112), wherein the plurality of filter cartridges (30; 130) are positioned such that air passing through the plurality of apertures in the tubesheet structure (34, 35; 134) must pass through at least one filter cartridge (30; 130) of the plurality of filter cartridges (30; 130), wherein the tubesheet structure (34, 35; 134) and the plurality of filter cartridges (30; 130) separate the housing (12; 112) into a clean air plenum and a dirty air plenum, and wherein the plurality of filter cartridges (30; 130) comprises a second filter cartridge (30; 130), and further wherein air passing through the first aperture must pass through the first filter cartridge (30; 130) and air passing through the second aperture must pass through the second filter cartridge (30; 130);
wherein the dirty air channel (24, 25, 26; 124, 125) comprises a first dirty air channel of a plurality of dirty air channels in the dirty air plenum and the dirty air flow axis comprises a first dirty air flow axis in the first dirty air channel, wherein the plurality of dirty air channels are located above the dirty air chamber, wherein the plurality of dirty air channels comprises a second dirty air channel, wherein dirty air flowing downward through the second dirty air channel defines a second dirty air flow axis;
and wherein dirty air moving downward through the first dirty air channel from the dirty air inlet to the dirty air chamber (40; 140) along the first dirty air flow axis flows past the upper clean air chamber (53, 54; 153) before flowing past the top of the first filter cartridge (30; 130), and wherein dirty air moving downward through the second dirty air channel from the dirty air inlet to the dirty air chamber (40; 140) along the second dirty air flow axis flows past the upper clean air chamber (53, 54; 153) before flowing past a top of the second filter cartridge (30; 130).

5. A dust collector according to claim 4, wherein the first dirty air channel is located on a first side of the upper clean air chamber (53, 54; 153) and the second dirty air channel is located on a second side of the upper clean air chamber (53, 54; 153).

6. A dust collector according to any one of claims 4 to 5, wherein the first dirty air channel is separate and independent of the second dirty air channel such that dirty air passing through the first dirty air channel must enter the dirty air chamber (40; 140) before it can enter the second dirty air channel.

7. A dust collector according to any one of claims 4 to 6, wherein the first dirty air channel comprises a first dirty air inlet and the second dirty air channel comprises a second dirty air inlet, and further wherein the first dirty air inlet is separate and independent of the second dirty air inlet such that dirty air passing through the first dirty air inlet cannot enter the second dirty air channel unless it passes through the dirty air chamber (40; 140) first and dirty air passing through the second dirty air inlet cannot enter the first dirty air unless it passes through the dirty air chamber (40; 140) first.

8. A dust collector according to any one of claims 4 to 7, wherein a clean air face (32) of the first filter cartridge (30) faces the lower clean air chamber (51, 52) and a clean air face (32) of the second filter cartridge (30) faces the lower clean air chamber (51, 52).

9. A dust collector according to any one of claims 4 to 8, wherein a clean air face (32) of the first filter cartridge (30) faces a clean air face (32) of the second filter cartridge (30) across the lower clean air chamber (51, 52).

10. A dust collector according to any one of claims 4 to 9, wherein the first filter cartridge (30) comprises a flat dirty air face (31), and wherein the first dirty air flow axis forms an included angle greater than zero degrees with the flat dirty air face (31) of the first filter cartridge (30), wherein the included angle opens in the downward direction towards the dirty air chamber; optionally wherein the first dirty air flow axis forms an included angle of 75 degrees or less with the flat dirty air face (31) of the first filter cartridge (30).

11. A dust collector according to any one of claims 1 to 10, wherein the dust collector further comprises a pulse jet cleaning system (60; 360) comprising a plurality of valves (61; 361) configured to deliver pulses of cleaning gas into the clean air plenum.

12. A method of removing particulates from dirty air using the dust collector of any one of the preceding claims, the method comprising:
passing dirty air into dirty air plenum of housing (12; 112; 212), wherein the dirty air passes into the housing (12; 112; 212) through the dirty air inlet and then downward through the dirty air channel (24, 25, 26; 124, 125; 224) along the dirty air flow axis before reaching the dirty air chamber;
passing the dirty air in the dirty air chamber (40; 140; 240) through filter cartridge (30; 130; 230) located over the aperture in the tubesheet structure (34, 35; 134; 234) that separates the dirty air plenum from a clean air plenum located in the housing (12; 112; 212), wherein particulates in the dirty air are removed from the dirty air by the filter cartridge (30; 130; 230) before passing into the clean air plenum;
wherein the dirty air moving through the dirty air channel (24, 25, 26; 124, 125; 224) from the dirty air inlet to the dirty air chamber (40; 140; 240) along the dirty air flow axis flows past the upper clean air chamber (53, 54; 153; 253);
wherein the dirty air passing through the dirty air channel (24, 25, 26; 124, 125; 224) along the dirty air flow axis moves downward past a top of the filter cartridge (30; 130; 230) before reaching the dirty air chamber;
wherein the dirty air entering the dirty air chamber (40; 140; 240) from the dirty air channel (24, 25, 26; 124, 125; 224) along the dirty air flow axis cannot directly impinge on the dirty air face (31; 231) of the filter cartridge (30; 130; 230) without changing direction in the dirty air chamber;
wherein a portion of the dirty air face (31; 231) of the filter cartridge (30; 130; 230) faces the dirty air flow axis,
wherein the dirty air flow axis forms an included angle greater than zero degrees with the portion of the dirty air face (31; 231) of the filter cartridge (30; 130; 230), and
wherein the included angle opens in the downward direction towards the dirty air chamber.

## Patentansprüche

1. Ein Staubsammler umfassend:
eine Öffnung, welche durch eine Rohrplattenstruktur (34, 35; 134; 234) ausgebildet ist, welche in einem Gehäuse (12; 112; 212) platziert ist;
eine Filterkartusche (30; 130; 230), welche in dem Gehäuse (12; 112; 212) platziert ist, wobei die Filterkartusche (30; 130; 230) so positioniert ist, dass Luft, welche durch die Öffnung in der Rohrplattenstruktur (34, 35; 134; 234) hindurchgeht, durch die Filterkartusche (30; 130; 230) hindurchgehen muss, wobei die Rohrplattenstruktur (34, 35; 134; 234) und die Filterkartusche (30; 130; 230) das Gehäuse (12; 112; 212) in einen Reinluft-Raum und einen Schmutzluft-Raum separieren;
wobei der Schmutzluft-Raum einen Schmutzluft-Kanal (24, 25, 26; 124, 125; 224) umfasst, welcher oberhalb einer Schmutzluft-Kammer (40; 140; 240), platziert ist, wobei der Schmutzluft-Kanal (24, 25, 26; 124, 125; 224) zwischen einem Schmutzluft-Einlass, durch welchen Schmutzluft in den Schmutzluft-Raum eintritt, und der Schmutzluft-Kammer (40; 140; 240) platziert ist, wobei die Schmutzluft-Kammer (40; 140; 240) unterhalb eines Oberteils der Filterkartusche (30; 130; 230) platziert ist, und wobei der Schmutzluft-Kanal (24, 25, 26; 124, 125; 224) eine Schmutzluft-Strömung-Achse durch den Schmutzluft-Kanal definiert;
wobei der Reinluft-Raum eine obere Reinluft-Kammer (53, 54; 153; 253), welche oberhalb des Oberteils der Filterkartusche (30; 130; 230) platziert ist, und eine untere Reinluft-Kammer (51, 52; 251) umfasst, welche unterhalb der oberen Reinluft-Kammer (53, 54; 153; 253) und dem Oberteil der Filterkartusche (30; 130; 230) platziert ist, wobei die Filterkartusche (30; 130; 230) eine Schmutzluft-Seite (31; 231) umfasst, welche von der unteren Reinluft-Kammer (51, 52; 251) abgewandt ist, und wobei Schmutzluft, welche sich durch den Schmutzluft-Kanal (24, 25, 26; 124, 125; 224) von dem Schmutzluft-Einlass zu der Schmutzluft-Kammer (40; 140; 240) entlang der Schmutzluft-Strömung-Achse bewegt, vorbei an der oberen Reinluft-Kammer (53, 54; 153; 253) strömt; und
wobei Schmutzluft, welche nach unten durch den Schmutzluft-Kanal (24, 25, 26; 124, 125; 224) entlang der Schmutzluft-Strömung-Achse überführt wird, sich vorbei an einem Oberteil der Filterkartusche (30; 130; 230) bewegt, bevor sie die Schmutzluft-Kammer erreicht,
wobei der Schmutzluft-Kanal (24, 25, 26; 124, 125; 224) so konfiguriert ist, dass Schmutzluft, welche in die Schmutzluft-Kammer (40; 140; 240) von dem Schmutzluft-Kanal (24, 25, 26; 124, 125; 224) entlang der Schmutzluft-Strömung-Achse eintritt, nicht direkt auf der Schmutzluft-Seite (31; 231) der Filterkartusche (30; 130; 230) auftreffen kann, ohne eine Richtung in der Schmutzluft-Kammer zu ändern; und
ein Abschnitt der Schmutzluft-Seite (31; 231) der Filterkartusche (30; 130; 230) der Schmutzluft-Strömung-Achse zugewandt ist, **dadurch gekennzeichnet, dass**
die Schmutzluft-Strömung-Achse einen eingeschlossenen Winkel, welcher größer als null Grad ist, mit dem Abschnitt der Schmutzluft-Seite (31; 231) der Filterkartusche (30; 130; 230) ausbildet, und wobei der eingeschlossene Winkel sich in der Richtung nach unten, in Richtung der Schmutzluft-Kammer (40; 140; 240) öffnet.

2. Staubsammler nach Anspruch 1, wobei die untere Reinluft-Kammer (51, 52; 251) des Reinluft-Raums unterhalb des Oberteils der Filterkartusche (30; 230) und der Öffnung in der Rohrplatte platziert ist, wobei eine Reinluft-Seite (32; 232) der Filterkartusche (30; 230) der unteren Reinluft-Kammer (51, 52; 251) zugewandt ist, und wobei die Schmutzluft-Seite (31; 231) der Filterkartusche (30; 230) von der unteren Reinluft-Kammer (51, 52; 251) abgewandt ist.

3. Staubsammler nach Anspruch 1, wobei die Schmutzluft-Strömung-Achse einen eingeschlossenen Winkel von 75 Grad oder weniger mit dem Abschnitt der Schmutzluft-Seite (31; 231) der Filterkartusche (30; 230) ausbildet.

4. Staubsammler nach Anspruch 1, wobei die Öffnung, welche durch die Rohrplattenstruktur (34, 35; 134) ausgebildet ist, eine erste Öffnung aus einer Mehrzahl von Öffnungen, welche durch die Rohrplattenstruktur (34, 35; 134) ausgebildet sind, umfasst, und wobei die Mehrzahl von Öffnungen eine zweite Öffnung umfasst;
wobei die Filterkartusche (30; 130) eine erste Filterkartusche (30; 130) aus einer Mehrzahl von Filterkartuschen (30; 130), welche in dem Gehäuse (12; 112) platziert sind, umfasst, wobei die Mehrzahl von Filterkartuschen (30; 130) so positioniert sind, dass Luft, welche durch die Mehrzahl von Öffnungen in der Rohrplattenstruktur (34, 35; 134), hindurchgeht, durch mindestens eine Filterkartusche (30; 130) aus der Mehrzahl von Filterkartuschen (30; 130) hindurchgehen muss, wobei die Rohrplattenstruktur (34, 35; 134) und die Mehrzahl von Filterkartuschen (30; 130) das Gehäuse (12; 112) in einen Reinluft-Raum und einen Schmutzluft-Raum separieren, und wobei die Mehrzahl von Filterkartuschen (30; 130) eine zweite Filterkartusche (30; 130) umfasst, und ferner wobei Luft, welche durch die erste Öffnung hindurchgeht, durch die erste Filterkartusche (30; 130) hindurchgehen muss und Luft, welche durch die zweite Öffnung hindurchgeht, durch die zweite Filterkartusche (30; 130) hindurchgehen muss;
wobei der Schmutzluft-Kanal (24, 25, 26; 124, 125) einen ersten Schmutzluft-Kanal aus einer Mehrzahl von Schmutzluft-Kanälen in dem Schmutzluft-Raum umfasst und die Schmutzluft-Strömung-Achse eine erste Schmutzluft-Strömung-Achse in dem ersten Schmutzluft-Kanal umfasst, wobei die Mehrzahl von Schmutzluft-Kanälen oberhalb der Schmutzluft-Kammer platziert sind, wobei die Mehrzahl von Schmutzluft-Kanälen einen zweiten Schmutzluft-Kanal umfasst, wobei Schmutzluft, welche durch den zweiten Schmutzluft-Kanal nach unten strömt, eine zweite Schmutzluft-Strömung-Achse definiert,
und wobei Schmutzluft, welche sich nach unten durch den ersten Schmutzluft-Kanal von dem Schmutzluft-Einlass zu der Schmutzluft-Kammer (40; 140) entlang der ersten Schmutzluft-Strömung-Achse bewegt, vorbei an der oberen Reinluft-Kammer (53, 54; 153) strömt, bevor sie vorbei an dem Oberteil der ersten Filterkartusche (30; 130) strömt, und wobei Schmutzluft, welche sich nach unten durch den zweiten Schmutzluft-Kanal von dem Schmutzluft-Einlass zu der Schmutzluft-Kammer (40; 140) entlang der zweiten Schmutzluft-Strömung-Achse bewegt, vorbei an der oberen Reinluft-Kammer (53, 54; 153) strömt, bevor sie vorbei an dem Oberteil der zweiten Filterkartusche (30; 130) strömt.

5. Staubsammler nach Anspruch 4, wobei der erste Schmutzluft-Kanal an einer ersten Seite der oberen Reinluft-Kammer (53, 54; 153) platziert ist und der zweite Schmutzluft-Kanal an einer zweiten Seite der oberen Reinluft-Kammer (53, 54; 153) platziert ist.

6. Staubsammler nach einem der Ansprüche 4 bis 5, wobei der erste Schmutzluft-Kanal separat und unabhängig von dem zweiten Schmutzluft-Kanal ist, sodass Schmutzluft, welche durch den ersten Schmutzluft-Kanal hindurchgeht, in die Schmutzluft-Kammer (40; 140) eintreten muss, bevor sie in den zweiten Schmutzluft-Kanal eintreten kann.

7. Staubsammler nach einem der Ansprüche 4 bis 6, wobei der erste Schmutzluft-Kanal einen ersten Schmutzluft-Einlass umfasst und der zweite Schmutzluft-Kanal einen zweiten Schmutzluft-Einlass umfasst, und wobei ferner der erste Schmutzluft-Einlass separat und unabhängig von dem zweiten Schmutzluft-Einlass ist, sodass Schmutzluft, welche durch den ersten Schmutzluft-Einlass hindurchgeht, nicht in den zweiten Schmutzluft-Kanal eintreten kann, es sei denn, sie geht zuerst durch die Schmutzluft-Kammer (40; 140) hindurch, und Schmutzluft, welche durch den zweiten Schmutzluft-Einlass hindurchgeht, nicht in die erste Schmutzluft eintreten kann, es sei denn, sie geht zuerst durch die Schmutzluft-Kammer (40; 140) hindurch.

8. Staubsammler nach einem der Ansprüche 4 bis 7, wobei eine Reinluft-Seite (32) der ersten Filterkartusche (30) der unteren Reinluft-Kammer (51, 52) zugewandt ist und eine Reinluft-Seite (32) der zweiten Filterkartusche (30) der unteren Reinluft-Kammer (51, 52) zugewandt ist.

9. Staubsammler nach einem der Ansprüche 4 bis 8, wobei eine Reinluft-Seite (32) der ersten Filterkartusche (30) einer Reinluft-Seite (32) der zweiten Filterkartusche (30) über die untere Reinluft-Kammer (51, 52) zugewandt ist.

10. Staubsammler nach einem der Ansprüche 4 bis 9, wobei die erste Filterkartusche (30) eine flache Schmutzluft-Seite (31) umfasst, und wobei die erste Schmutzluft-Strömung-Achse einen eingeschlossenen Winkel, welcher größer als null Grad ist, mit der flachen Schmutzluft-Seite (31) der ersten Filterkartusche (30) ausbildet, wobei der eingeschlossene Winkel sich in der Richtung nach unten, in Richtung der Schmutzluft-Kammer öffnet, wobei optional die erste Schmutzluft-Strömung-Achse einen eingeschlossenen Winkel, welcher 75 Grad oder kleiner ist, mit der flachen Schmutzluft-Seite (31) der ersten Filterkartusche (30) ausbildet.

11. Staubsammler nach einem der Ansprüche 1 bis 10, wobei der Staubsammler ferner ein Puls-Strahl-Reinigungssystem (60; 360) umfasst, welches eine Mehrzahl von Ventilen (61; 361) umfasst, konfiguriert zum Zuführen von Pulsen von Reinigungsgas in den Reinluft-Raum.

12. Verfahren zum Entfernen von Partikeln aus Schmutzluft unter Verwendung des Staubsammlers nach einem der vorhergehenden Ansprüche, wobei das Verfahren umfasst:
Überführen von Schmutzluft in einen Schmutzluft-Raum eines Gehäuses (12; 112; 212), wobei die Schmutzluft in das Gehäuse (12; 112; 212) durch den Schmutzluft-Einlass und dann nach unten durch den Schmutzluft-Kanal (24, 25, 26; 124, 125; 224) entlang der Schmutzluft-Strömung-Achse überführt wird, bevor sie die Schmutzluft-Kammer erreicht;
Überführen der Schmutzluft in die Schmutzluft-Kammer (40; 140; 240) durch eine Filterkartusche (30; 130; 230), welche über der Öffnung in der Rohrplattenstruktur (34, 35; 134; 234) platziert ist, welche den Schmutzluft-Raum von einem Reinluft-Raum, welcher in dem Gehäuse (12; 112; 212) platziert ist, separiert, wobei Partikel in der Schmutzluft aus der Schmutzluft durch die Filterkartusche (30; 130; 230) vor einer Überführung in den Reinluft-Raum entfernt werden,
wobei die Schmutzluft, welche sich durch den Schmutzluft-Kanal (24, 25, 26; 124, 125; 224) von dem Schmutzluft-Einlass zu der Schmutzluft-Kammer (40; 140; 240) entlang der Schmutzluft-Strömung-Achse bewegt, vorbei an der oberen Reinluft-Kammer (53, 54; 153; 253) strömt;
wobei die Schmutzluft, welche durch den Schmutzluft-Kanal (24, 25, 26; 124, 125; 224) entlang der Schmutzluft-Strömung-Achse überführt wird, sich nach unten vorbei an einem Oberteil der Filterkartusche (30; 130; 230) bewegt, bevor sie die Schmutzluft-Kammer erreicht;
wobei die Schmutzluft, welche in die Schmutzluft-Kammer (40; 140; 240) von dem Schmutzluft-Kanal (24, 25, 26; 124, 125; 224) entlang der Schmutzluft-Strömung-Achse eintritt, nicht direkt auf der Schmutzluft-Seite (31; 231) der Filterkartusche (30; 130; 230) auftreffen kann, ohne eine Richtung in der Schmutzluft-Kammer zu ändern;
wobei ein Abschnitt der Schmutzluft-Seite (31; 231) der Filterkartusche (30; 130; 230) der Schmutzluft-Strömung-Achse zugewandt ist,
wobei die Schmutzluft-Strömung-Achse einen eingeschlossenen Winkel, welcher größer als null Grad ist, mit dem Abschnitt der Schmutzluft-Seite (31; 231) der Filterkartusche (30; 130; 230) ausbildet, und
wobei der eingeschlossene Winkel sich in der Richtung nach unten, in Richtung der Schmutzluft-Kammer öffnet.

## Revendications

1. Collecteur de poussière comprenant :
une ouverture formée à travers une structure en feuille tubulaire (34, 35 ; 134 ; 234) localisée dans un logement (12 ; 112 ; 212) ;
une cartouche filtrante (30 ; 130 ; 230) localisée dans le logement (12 ; 112 ; 212), la cartouche filtrante (30; 130; 230) étant positionnée de sorte que l'air passant à travers l'ouverture dans la structure en feuille tubulaire (34, 35 ; 134 ; 234) est obligé de passer à travers la cartouche filtrante (30 ; 130 ; 230), la structure en feuille tubulaire (34, 35 ; 134 ; 234) et la cartouche filtrante (30 ; 130 ; 230) séparant le logement (12 ; 112 ; 212) en un plénum d'air propre et un plénum d'air sale ;
dans lequel le plénum d'air sale comprend un canal d'air sale (24, 25, 26 ; 124, 125 ; 224) localisé au-dessus d'un compartiment d'air sale (40 ; 140 ; 240), le canal d'air sale (24, 25, 26 ; 124, 125 ; 224) étant localisé entre un orifice d'entrée d'air sale à travers lequel l'air sale pénètre dans le plénum d'air sale et le compartiment d'air sale (40 ; 140 ; 240), le compartiment d'air sale (40 ; 140 ; 240) étant localisé en-dessous d'une partie supérieure de la cartouche filtrante (30 ; 130 ; 230), et le canal d'air sale (24, 25, 26; 124, 125; 224) définissant un axe d'écoulement d'air sale à travers le canal d'air sale ;
le plénum d'air propre comprenant un compartiment d'air propre supérieur (53, 54; 153; 253) localisé au-dessus de la partie supérieure de la cartouche filtrante (30 ; 130 ; 230) et un compartiment d'air propre inférieur (51, 52 ; 251) localisé en-dessous du compartiment d'air propre supérieur (53, 54 ; 153 ; 253) et la partie supérieure de la cartouche filtrante (30 ; 130; 230), la cartouche filtrante (30 ; 130 ; 230) comprenant une face d'air sale (31 ; 231) faisant face à l'opposé du compartiment d'air propre inférieur (51, 52 ; 251), et dans lequel l'air sale qui se déplace à travers le canal d'air sale (24, 25, 26 ; 124, 125 ; 224) depuis l'orifice d'entrée d'air sale vers le compartiment d'air sale (40 ; 140 ; 240) le long de l'axe d'écoulement d'air sale traverse le compartiment d'air propre supérieur (53, 54 ; 153 ; 253) ; et
dans lequel l'air sale passant vers le bas à travers le canal d'air sale (24, 25, 26 ; 124, 125 ; 224) le long de l'axe d'écoulement d'air sale se déplace au-delà d'une partie supérieure de la cartouche filtrante (30 ; 130 ; 230) avant d'atteindre le compartiment d'air sale ;
dans lequel le canal d'air sale (24, 25, 26 ; 124, 125 ; 224) est configuré de sorte que l'air sale pénétrant dans le compartiment d'air sale (40 ; 140 ; 240) depuis le canal d'air sale (24, 25, 26 ; 124, 125 ; 224) le long de l'axe d'écoulement d'air sale ne peut pas directement affecter la face d'air sale (31 ; 231) de la cartouche filtrante (30 ; 130 ; 230) sans changer de direction dans le compartiment d'air sale ; et
une partie de la face d'air sale (31 ; 231) de la cartouche filtrante (30 ; 130 ; 230) fait face à l'axe d'écoulement d'air sale, **caractérisé en ce que** l'axe d'écoulement d'air sale forme un angle inclus supérieur à zéro degré avec la partie de la face d'air sale (31 ; 231) de la cartouche filtrante (30 ; 130 ; 230), et l'angle inclus s'ouvrant vers le bas en direction du compartiment d'air sale (40 ; 140 ; 240).

2. Collecteur de poussière selon la revendication 1, le compartiment d'air propre inférieur (51, 52 ; 251) du plénum d'air propre étant localisé en-dessous de la partie supérieure de la cartouche filtrante (30 ; 230) et l'ouverture dans la feuille tubulaire, une face d'air propre (32 ; 232) de la cartouche filtrante (30 ; 230) faisant face au compartiment d'air propre inférieur (51, 52 ; 251), et la face d'air sale (31 ; 231) de la cartouche filtrante (30 ; 230) faisant face à l'opposé du compartiment d'air propre inférieur (51, 52 ; 251).

3. Collecteur de poussière selon la revendication 1, l'axe d'écoulement d'air sale formant un angle inclus de 75 degrés ou moins avec la partie de la face d'air sale (31 ; 231) de la cartouche filtrante (30 ; 230).

4. Collecteur de poussière selon la revendication 1, l'ouverture formée à travers la structure en feuille tubulaire (34, 35 ; 134) comprenant une première ouverture d'une pluralité d'ouvertures formées à travers la structure en feuille tubulaire (34, 35 ; 134), et la pluralité des ouvertures comprenant une seconde ouverture ;
dans lequel la cartouche filtrante (30 ; 130) comprend une première cartouche filtrante (30 ; 130) d'une pluralité de cartouches filtrantes (30 ; 130) localisées dans le logement (12 ; 112), la pluralité des cartouches filtrantes (30 ; 130) étant positionnées de sorte que l'air passant à travers la pluralité des ouvertures dans la structure en feuille tubulaire (34, 35 ; 134) est obligé de passer à travers au moins une cartouche filtrante (30 ; 130) de la pluralité des cartouches filtrantes (30 ; 130), la structure en feuille tubulaire (34, 35 ; 134) et la pluralité des cartouches filtrantes (30 ; 130) séparant le logement (12 ; 112) en un plénum d'air propre et un plénum d'air sale, et la pluralité des cartouches filtrantes (30 ; 130) comprenant une seconde cartouche filtrante (30 ; 130), et en outre l'air passant à travers la première ouverture devant passer à travers la première cartouche filtrante (30 ; 130) et l'air passant à travers la seconde ouverture devant passer à travers la seconde cartouche filtrante (30 ; 130) ;
le canal d'air sale (24, 25, 26 ; 124, 125) comprenant un premier canal d'air sale d'une pluralité de canaux d'air sale dans le plénum d'air sale et l'axe d'écoulement d'air sale comprenant un premier axe d'écoulement d'air sale dans le premier canal d'air sale, la pluralité des canaux d'air sale étant localisés au-dessus du compartiment d'air sale, la pluralité des canaux d'air sale comprenant un second canal d'air sale, l'air sale s'écoulant vers le bas à travers le second canal d'air sale définissant un second axe d'écoulement d'air sale ;
et l'air sale se déplaçant vers le bas à travers le premier canal d'air sale depuis l'orifice d'entrée d'air sale vers le compartiment d'air sale (40 ; 140) le long du premier axe d'écoulement d'air sale traverse le compartiment d'air propre supérieur (53, 54 ; 153) avant de traverser une partie supérieure de la première cartouche filtrante (30 ; 130), et l'air sale se déplaçant vers le bas à travers le second canal d'air sale depuis l'orifice d'entrée d'air sale vers le compartiment d'air sale (40; 140) le long du second axe d'écoulement d'air sale traversant le compartiment d'air propre supérieur (53, 54 ; 153) avant de traverser une partie supérieure de la seconde cartouche filtrante (30 ; 130).

5. Collecteur de poussière selon la revendication 4, le premier canal d'air sale étant localisé sur un premier côté du compartiment d'air propre supérieur (53, 54 ; 153) et le second canal d'air sale étant localisé sur un second côté du compartiment d'air propre supérieur (53, 54 ; 153).

6. Collecteur de poussière selon l'une quelconque des revendications 4 à 5, le premier canal d'air sale étant séparé et indépendant du second canal d'air sale de sorte que l'air sale passant à travers le premier canal d'air sale est obligé de pénétrer dans le compartiment d'air sale (40; 140) avant de pénétrer dans le second canal d'air sale.

7. Collecteur de poussière selon l'une quelconque des revendications 4 à 6, le premier canal d'air sale comprenant un premier orifice d'entrée d'air sale et le second canal d'air sale comprenant un second orifice d'entrée d'air sale, et en outre le premier orifice d'entrée d'air sale étant séparé et indépendant du second orifice d'entrée d'air sale de sorte que l'air sale passant à travers le premier orifice d'entrée d'air sale ne peut pas pénétrer dans le second canal d'air sale à moins qu'il passe à travers le compartiment d'air sale (40 ; 140) en premier et l'air sale passant à travers le second orifice d'entrée d'air sale ne peut pas pénétrer dans le premier d'air sale à moins qu'il passe à travers le compartiment d'air sale (40 ; 140) en premier.

8. Collecteur de poussière selon l'une quelconque des revendications 4 à 7, une face d'air propre (32) de la première cartouche filtrante (30) faisant face au compartiment d'air propre inférieur (51, 52) et une face d'air propre (32) de la seconde cartouche filtrante (30) faisant face au compartiment d'air propre inférieur (51, 52).

9. Collecteur de poussière selon l'une quelconque des revendications 4 à 8, une face d'air propre (32) de la première cartouche filtrante (30) faisant face à une face d'air propre (32) de la seconde cartouche filtrante (30) à travers le compartiment d'air propre inférieur (51, 52).

10. Collecteur de poussière selon l'une quelconque des revendications 4 à 9, la première cartouche filtrante (30) comprenant une face d'air sale plate (31), et le premier axe d'écoulement d'air sale formant un angle inclus supérieur à zéro degré avec la face d'air sale plate (31) de la première cartouche filtrante (30), l'angle inclus s'ouvrant vers le bas vers le compartiment d'air sale ; éventuellement le premier axe d'écoulement d'air sale formant un angle inclus de 75 degrés ou moins avec la face d'air sale plate (31) de la première cartouche filtrante (30).

11. Collecteur de poussière selon l'une quelconque des revendications 1 à 10, le collecteur de poussière comprenant en outre un système de nettoyage par jet par impulsion (60 ; 360) comprenant une pluralité de distributeurs (61 ; 361) configurés pour délivrer des impulsions de gaz de nettoyage dans le plénum d'air propre.

12. Procédé d'élimination de particules d'air sale utilisant le collecteur de poussière selon l'une quelconque des revendications précédentes, le procédé comprenant :
le passage de l'air sale dans un plénum d'air sale de logement (12 ; 112 ; 212), l'air sale passant dans le logement (12 ; 112 ; 212) à travers l'orifice d'entrée d'air sale et ensuite vers le bas à travers le canal d'air sale (24, 25, 26 ; 124, 125 ; 224) le long de l'axe d'écoulement d'air sale avant d'atteindre le compartiment d'air sale ;
le passage de l'air sale dans le compartiment d'air sale (40 ; 140 ; 240) à travers la cartouche filtrante (30 ; 130; 230) localisée sur l'ouverture dans la structure en feuille tubulaire (34, 35 ; 134 ; 234) qui sépare le plénum d'air sale d'un plénum d'air propre localisé dans le logement (12 ; 112 ; 212), les particules dans l'air sale étant éliminées de l'air sale par la cartouche filtrante (30 ; 130 ; 230) avant de passer dans le plénum d'air propre ;
l'air sale se déplaçant à travers le canal d'air sale (24, 25, 26 ; 124, 125 ; 224) depuis l'orifice d'entrée d'air sale vers le compartiment d'air sale (40 ; 140 ; 240) le long de l'axe d'écoulement d'air sale traverse le compartiment d'air propre supérieur (53, 54 ; 153 ; 253) ;
l'air sale passant à travers le canal d'air sale (24, 25, 26 ; 124, 125 ; 224) le long de l'axe d'écoulement d'air sale se déplaçant vers le bas à travers une partie supérieure de la cartouche filtrante (30 ; 130; 230) avant d'atteindre le compartiment d'air sale ;
l'air sale pénétrant dans le compartiment d'air sale (40 ; 140 ; 240) depuis le canal d'air sale (24, 25, 26 ; 124, 125 ; 224) le long de l'axe d'écoulement d'air sale ne peut pas directement affecter la face d'air sale (31 ; 231) de la cartouche filtrante (30 ; 130 ; 230) sans changer de direction dans le compartiment d'air sale ;
une partie de la face d'air sale (31 ; 231) de la cartouche filtrante (30 ; 130 ; 230) faisant face à l'axe d'écoulement d'air sale,
l'axe d'écoulement d'air sale formant un angle inclus supérieur à zéro degré avec la partie de la face d'air sale (31 ; 231) de la cartouche filtrante (30 ; 130 ; 230), et
l'angle inclus s'ouvrant dans le sens vers le bas vers le compartiment d'air sale.
